# EUROPEAN PATENT SPECIFICATION

(11) **EP 1 690 481 B1**
(45) Date of publication and mention of the grant of the patent: **10.12.2008**
(21) Application number: 06250235.6
(22) Date of filing: 17.01.2006
(51) Int. Cl.: A47J 31/40, G07F 13/06, G07F 13/10, F25C 5/12

(54) **Beverage dispenser**
Getränkeabgabevorrichtung
Distributeur de boissons

(30) Priority: 19.01.2005 JP 2005011135
(43) Date of publication of application: 16.08.2006
(73) Proprietor: Sanden Corporation, Isesaki-shi, Gunma 372-8502 (JP)
(72) Inventor: Sato, Takeshi, Isesaki-shi, Gunma 372-8502 (JP); Toriumi, Takahiro, Isesaki-shi, Gunma 372-8502 (JP); Akuzawa, Takayuki, Isesaki-shi, Gunma 372-8502 (JP)
(74) Representative: Haley, Stephen

(56) References cited:
- BR-A- 9 302 729
- US-A1- 2004 129 016
- US-A1- 2004 239 519

## Description

The present invention relates to a beverage dispenser for dispensing cupped beverages.

By a known conventional beverage preparing method for beverage dispensers of this kind, when a cold beverage is to be prepared, it is served cold by putting solid ice grains, prepared by an ice maker, into a beverage generated by melting a powder material by mixing it in a cup with hot water, a coffee extract of the like.

However, this conventional beverage preparing method for beverage dispensers invites splashing, when ice grains are put into a cup containing a beverage, of the beverage by the impact of the ice grains falling onto the surface of the beverage. The sticking of the beverage splashes on the inner wall of the cup might make the beverage look awkward as a commodity. Also, beverage splashes might also go out of the cup to smear the inside of the beverage dispenser, resulting in a long time taken to clean or otherwise maintain the dispenser.

Also, when a cold beverage is to be generated by pouring the beverage into an empty cup after ice grains are put into it, the ice grains, when put into the cup, may bounce in, and eventually out of, the cup.

US-A-2004/129016 discloses a beverage dispenser capable of dispensing ice grains or flakes of different sizes.

An object of the present invention is to provide a beverage dispenser which can prevent, when solid ice grains are put into a cup; the beverage or the ice grains from splashing.

In order to achieve the object stated above, the invention comprises a beverage dispenser comprising:
an ice maker for generating ice grains by refrigerating drinking water;
an ice shaver for generating ice flakes by shaving ice; and
an ice input control unit for putting a prescribed quantity of ice flakes whose grain size is smaller than that of ice grains into a cup before putting a prescribed quantity of ice grains into the cup.

Since ice flakes are put into the cup before ice grains are put into it in this configuration, the ice grains drop onto the ice flakes to prevent the beverage or the ice grains from being scattered. Therefore, since dropping of the ice grains over the ice flakes when putting solid ice grains into the cup can prevent the beverage from splashing, the beverage does not stick to the inner surface of the cup, resulting in unmarred appearance of the vended product. Further, since the beverage or the ice grains can also be prevented from splashing outside the cup, the inside of the beverage dispenser can be kept sanitary, facilitating the cleaning of the inside at the time of maintenance work.

These and other objects, features and advantages will become more apparent from the detailed description below when taken in conjunction with the accompanying drawings.

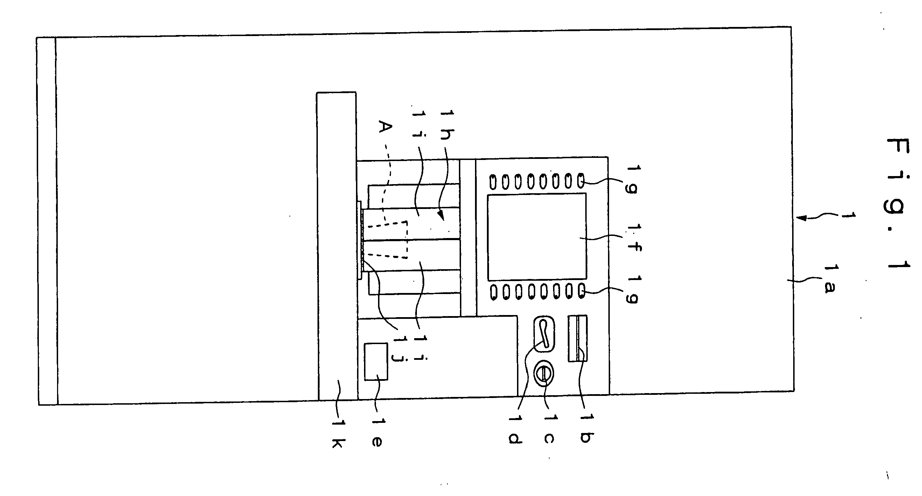

FIG. 1 shows a front view of a beverage dispenser, which is a first embodiment of the invention;
FIG. 2 shows a schematic configuration within the dispenser body;
FIG. 3 is a block diagram showing the control system of the dispenser;
FIG. 4 is a flow chart showing the process of beverage generation;
FIG. 5 illustrates operations in the process of beverage generation;
FIG. 6 illustrates an operation in the process of beverage generation;
FIG. 7 illustrates another operation in the process of beverage generation;
FIG. 8 illustrates another operation in the process of beverage generation;
FIG. 9 illustrates another operation in the process of beverage generation; and
FIG. 10 illustrates another operation in the process of beverage generation.

This beverage dispenser comprises a body 1, a cup carrier 2 for carrying cups A, a hot water generator 3 for generating hot water, a first material storage 4 for storing coffee beans as the raw material, a coffee extractor 5 for extracting coffee liquid from the coffee beans, a plurality of second material storages 6 for storing powder materials, an ice maker 7 for making solid ice grains, an ice shaver 8 as ice input unit by generating ice flakes by shaving the ice grains made by the ice maker 7, an agitator 9 for agitating the beverage, a holder mover 10 for moving a cup holder 10a holding a cup A and a controller 11.

The body 1 is provided with a door 1a for opening and closing the front opening of a cabinet whose front side can be opened. On the front face of the door 1a, there are disposed a paper money slit 1b, a coin slit 1c, a return lever 1d, a coin return pocket 1e, a liquid crystal display 1f, and a plurality of operating buttons 1g arranged to the right and left of the liquid crystal display 1f. Underneath the liquid crystal display 1f on the front face of the door 1a, there are provided a rectangular cup outlet 1h longer perpendicularly, a pair of right and left slide doors 1i for opening and closing the cup outlet 1h, a cup mount 1j arranged outside the cup outlet 1h, and a simplified table 1k protruding forward from the front face of the door 1a.

The cup carrier 2 has a known configuration for accommodating inverse circular conically shaped cups A for use in beverage vending, and lets the cups A fall down one by one.

The hot water generator 3, which generates hot water of about 90°C with a heater not shown, can discharge a prescribed quantity of hot water from a nozzle 3a into a cup A.

The first material storage 4, having a mill for grinding coffee beans, delivers a prescribed quantity of the material (ground beans) to the coffee extractor 5.

The coffee extractor 5 has a known configuration for extracting coffee liquid from the material (ground beans) by using the hot water supplied from the hot water generator 3, and the coffee liquid is poured into a cup A from a nozzle 5a.

Each of the second material storages 6 accommodates one out of different powder materials including cocoa, cream and sugar, and puts a prescribed quantity of the material into the cup A via a shooter 6a.

The ice maker 7, having a known configuration for generating solid ice grains from drinking water, delivers the generating ice grains to the ice shaver 8. The ice grains generated by the ice maker 7 have an average external diameter of 8 mm or more.

The ice shaver 8 can, instead of shaving with a grinding edge the ice grains delivered from the ice maker 7, can also deliver outside the ice grains without grinding them. The ice shaver 8 puts ice grains or ice flakes into the cup A via a shooter 8a. The ice flakes generated by the ice shaver 8 have an average external diameter of 5 mm or less.

The agitator 9 agitates the content of the cup A by turning a screw-shaped agitating member 9a with a motor 9b. The agitator 9 is moved up and down by an elevating mechanism not shown.

The holder mover 10 comprises the cup holder 10a formed in a C shape to hold a cup A and a motion converting mechanism (not shown) capable of converting the rotating motion of the cup holder 10a given by the motor into a linear motion, such as a feed screw mechanism. The holder mover 10 moves the cup holder 10a to the cup delivering position of the cup carrier 2, the material discharging position of each of the second material storages 6 and the beverage generating position.

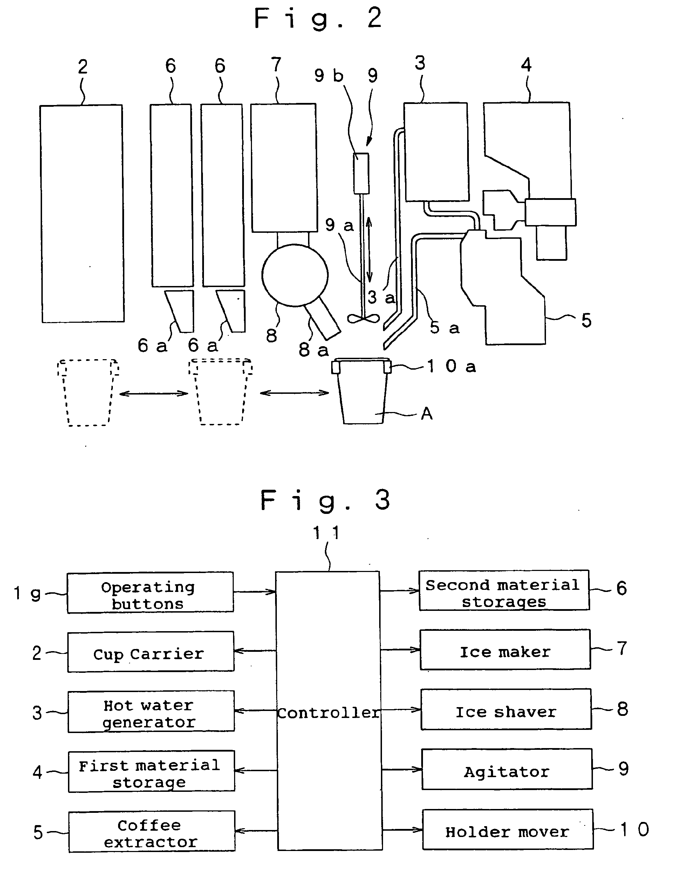

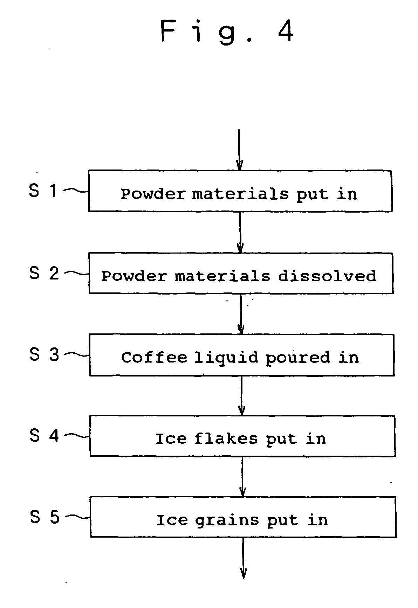

The controller 11, configured of a microcomputer, is connected to the operating buttons 1g, the cup carrier 2, the hot water generator 3, the first material storage 4, the coffee extractor 5, the second material storages 6, the ice maker 7, the ice shaver 8, the agitator 9 and the holder mover 10 as shown in FIG. 3. A memory in the controller 11 stores, in addition to a program regarding the generation of generating a beverage as charted in FIG. 4, a program regarding the operation of the holder mover 10 among others.

Selling actions of the beverage dispenser configured as described above when iced coffee with sugar and cream has been selected for example will be described with reference to the flow chart of FIG. 4 and FIG. 5 through FIG. 10 illustrative of operations.

First, a purchaser selects a beverage by pressing one of the operating buttons 1g and puts in the required sum of money. The cup holder mover 10 moves the cup holder 10a to the cup delivering position of the cup carrier 2, and causes the cup holder 10a to hold a cup A delivered downward from the cup carrier 2.

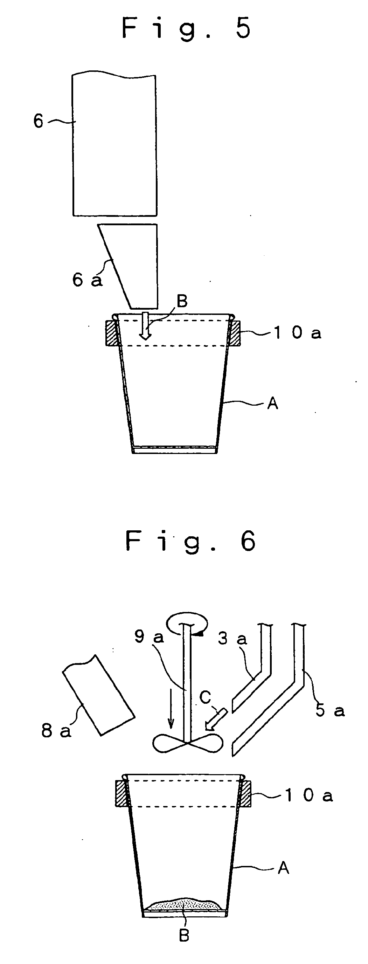

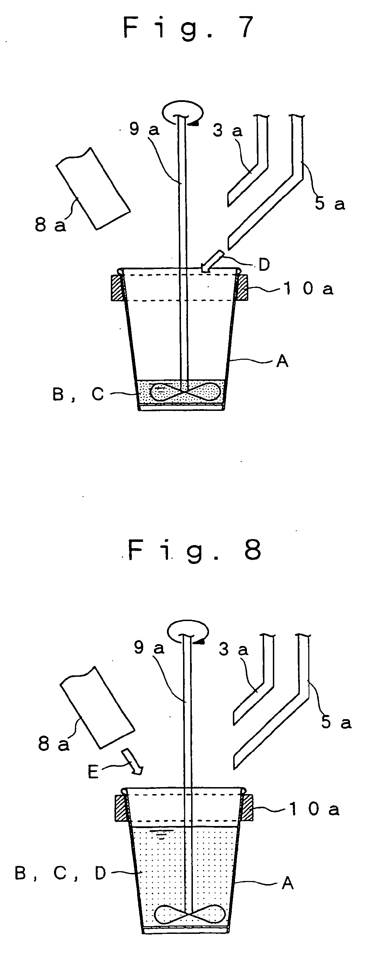

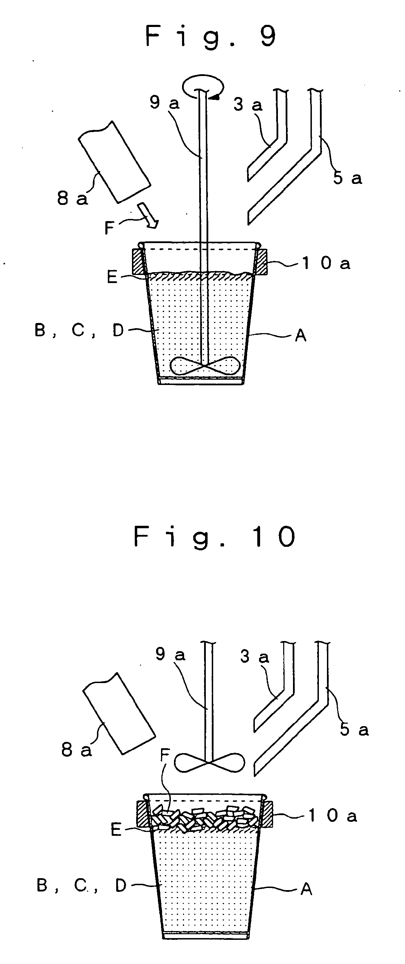

Next, the cup A held by the cup holder 10a is moved sequentially to the material discharging position of each of the second material storages 6 to have sugar and cream as powder materials B put into the cup A sequentially as shown in FIG. 5 (step S1 in FIG. 4). Then, the cup A is moved to the beverage generating position, a prescribed quantity of dissolving hot water C is poured from the nozzle 3a into the cup A of the hot water generator 3, and the powder materials are dissolved by agitating the content of the cup A with the agitator 9 as shown in FIG. 6 (step S2 in FIG. 4). Then, as shown in FIG. 7, coffee liquid D is poured into the cup A from the nozzle 5a of the coffee extractor 5 (step 3 in FIG. 4) and, as shown in FIG. 8, ice flakes E are put into the cup A from the ice shaver 8 via the shooter 8a (step S4 in FIG. 4). Then, the quantity of the ice flakes E to be put into the cup A is a sufficient quantity to spread over the liquid surface of the beverage contained in the cup A. Next, as shown in FIG. 9, ice grains F are put into the cup A via the ice shaver 8 and the shooter 8a (step S5 in FIG. 4). Upon completion of the agitation of the content of the cup A, iced coffee is made ready to be served as shown in FIG. 10.

After that, the cup holder 10a performs a prescribed delivering action to deliver the cup A containing the generated iced coffee out of the cup outlet 1h of the body 1, and thereby completes the vending operation.

When ice grains F are put into the cup A, as a sufficient quantity of ice flakes E to float over the whole liquid surface in the cup A is already there, the ice grains F will not directly drop onto the liquid surface of the beverage to splash the beverage.

In this embodiment of the invention, since solid ice grains F are put into the cup A containing a beverage after ice flakes E have been put therein, dropping of the ice grains F over the ice flakes E floating all over the liquid surface in the cup A can prevent the beverage from splashing. Nor does the beverage stick to the inner surface of the cup A, resulting in unmarred appearance of the vended product. Since the beverage or the ice grains F can also be prevented from splashing outside the cup A, the inside of the body 1 can be kept sanitary, facilitating the maintenance work including the cleaning of the inside.

Further, as a sufficient quantity of ice flakes to float over the whole liquid surface in the cup A is put into the cup A, ice grains F do not directly drop onto the liquid surface of the beverage, splashing of the beverage in the cup A can be prevented more securely.

Also, as ice flakes E and ice grains F can be put into the cup A separately via the shooter 8a, the ice grains F can be put immediately after the inputting of the ice flakes E without having to move the cup A, the ice flakes E can be prevented from melting into the beverage and thereby exposing its liquid surface when ice grains F are put into the cup A.

Further, as ice grains F are generated by refrigerating drinking water with the ice maker 7 and ice flakes E are generated by shaving the ice grains F, Another ice maker for ice flakes E is unnecessary. Ice flakes E can be generated from ice grains F made by the ice maker 7, and the manufacturing cost can be reduced correspondingly.

Although the above-described embodiment of the invention is supposed to have a configuration in which a beverage is generated by putting powder materials B into a cup A, dissolving the powder materials B in a prescribed quantity of hot water that is poured in, and pouring liquid coffee into the cup A, and ice flakes E and ice grains F are sequentially put into the cup A in which the beverage is generated to make iced coffee ready to be served, it is also possible to prepare servable iced coffee by putting powder materials B into the cup A, putting ice flakes E and ice grains F are sequentially after dissolving the powder materials B in a prescribed quantity of hot water that is poured, and pouring extracted coffee liquid into the cup A.

Also, though in the foregoing description of the embodiment it is supposed to generate a beverage by putting powder materials B into a cup A, dissolving the powder materials B in a prescribed quantity of hot water that is poured in, and pouring liquid coffee after that, a beverage may as well be prepared by dissolving a powder material such as coffee powder or cocoa and diluting the solution. The beverage that is to be served may be a product of dilution of a concentrate of coffee, syrup or the like with cold or hot water. By sequentially putting ice flakes E and ice grains F into prepared beverages, a wide variety of cold beverages can be generated.

Although it is supposed in the foregoing description of the embodiment that ice flakes E and ice grains F are put into a cup A already containing a beverage, a cold beverage may as well be generated by pouring a beverage into a cup A already containing ice flakes E and ice grains F which were sequentially put into the cup when it was empty. In this case, as in the embodiment described above, the ice grains F can be dropped onto the ice flakes E to prevent the ice grains F from being splashed out of the cup A by their direct collision with the inner face of the cup A. Then, the quantity of the ice flakes E to be put into the cup A is a sufficient quantity to spread over the bottom face of the cup A.

The preferred embodiment of the invention described in this specification is only illustrative but in no way limits the scope of the invention, which is specified in the appended claims, and all the modifications that fit what the claims mean are included in the scope of the invention.

## Claims

1. A beverage dispenser comprising:
an ice maker (7) for generating ice grains (F) by refrigerating drinking water;
an ice shaver (8) for generating ice flakes (E) by shaving ice; and
an ice input control unit for putting a prescribed quantity of ice flakes (E) whose grain size is smaller than that of ice grains (F) into a cup (A) before putting a prescribed quantity of ice grains (F) into the cup (A).

2. The beverage dispenser according to Claim 1, wherein:
the cup (A) into which said ice flakes (E) are to be put is empty.

3. The beverage dispenser according to Claim 2 wherein:
the quantity of the ice flakes (E) to be put into said cup (A) is a sufficient quantity to spread over the bottom face of the cup (A).

4. The beverage dispenser according to Claim 2 wherein:
the position of the cup (A) when said ice grains (F) are to be put into the cup (A) and the position of the cup (A) when the ice flakes (E) are to be put into the cup (A) are the same.

5. The beverage dispenser according to Claim 2, wherein:
said ice flakes ( E ) are generated by shaving with the ice shaver (8) the ice grains (F) generated by the ice maker (7).

6. The beverage dispenser according to Claim 2, wherein:
said ice grains (F) are not less than 8 mm in average grain size and the ice flakes (E) are not more than 5 mm in average grain size.

7. The beverage dispenser according to Claim 1, wherein:
the cup (A) into which said ice flakes (E) are to be put contains a beverage in advance.

8. The beverage dispenser according to Claim 7, wherein:
the quantity of the ice flakes (E) to be put into said cup (A) is a sufficient quantity to spread over the liquid surface of the beverage contained in the cup (A).

9. The beverage dispenser according to Claim 7, wherein:
the position of the cup (A) when said ice grains (F) are to be put into the cup (A) and the position of the cup (A) when the ice flakes (E) are to be put into the cup (A) are the same.

10. The beverage dispenser according to Claim 7, wherein:
said ice flakes ( E ) are generated by shaving with the ice shaver (8) the ice grains (F) generated by the ice maker (7).

11. The beverage dispenser according to Claim 7, wherein:
said ice grains ( F ) are not less than 8 mm in average grain size and the ice flakes (E) are not more than 5 mm in average grain size.

## Patentansprüche

1. Getränkeabgabevorrichtung mit:
einer Eisherstellvorrichtung (7) zum Erzeugen von Eiskörnern (F) durch Kühlen von Trinkwasser;
einer Eisschervorrichtung (8) zum Erzeugen von Eisflokken (E) durch Scheren von Eis; und
einer Eiseingabesteuereinheit zum Einbringen einer vorgeschriebenen Menge von Eisflocken (E), deren Korngröße kleiner als die der Eiskörner (F) ist, in einen Becher (A), bevor eine vorgeschriebene Menge von Eiskörnern (F) in den Becher (A) eingebracht wird.

2. Getränkeabgabevorrichtung nach Anspruch 1,
bei der der Becher (A), in den die Eisflocken (E) einzubringen sind, leer ist.

3. Getränkeabgabevorrichtung nach Anspruch 2,
bei der die Menge der Eisflocken (E), die in den Becher (A) einzubringen sind, eine ausreichende Menge ist zum Ausbreiten über die Bodenfläche des Bechers (A).

4. Getränkeabgabevorrichtung nach Anspruch 2,
bei der die Position des Bechers (A), wenn die Eiskörner (F) in den Becher (A) einzubringen sind, und die Position des Bechers (A), wenn die Eisflocken (E) in den Becher (A) einzubringen sind, die gleiche ist.

5. Getränkeabgabevorrichtung nach Anspruch 2,
bei der die Eisflocken (E) erzeugt werden durch Scheren der Eiskörner (F) mit der Eisschervorrichtung (8), die durch die Eisherstellvorrichtung (7) erzeugt sind.

6. Getränkeabgabevorrichtung nach Anspruch 2,
bei der die Eiskörner (F) nicht weniger als 8mm in der mittleren Korngröße sind und die Eisflocken (E) nicht mehr als 5mm in der mittleren Korngröße sind.

7. Getränkeabgabevorrichtung nach Anspruch 1, bei der der Becher (A), in den die Eisflocken (E) einzubringen sind, ein Getränk im Voraus enthält.

8. Getränkeabgabevorrichtung nach Anspruch 7,
bei der die Menge der Eisflocken (E), die in den Becher (A) einzubringen sind, eine ausreichende Menge zum Ausbreiten über die Flüssigkeitsoberfläche des Getränkes ist, das in dem Becher (A) enthalten ist.

9. Getränkeabgabevorrichtung nach Anspruch 7,
bei der die Position des Bechers (A), wenn die Eiskörner (F) in den Becher (A) einzubringen sind, und die Position des Bechers (A), wenn die Eisflocken (E) in den Becher (A) einzubringen sind, die gleiche ist.

10. Getränkeabgabevorrichtung nach Anspruch 7,
bei der die Eisflocken (E) erzeugt werden durch Scheren der Eiskörner (F) mit der Eisschervorrichtung (8), die durch die Eisherstellvorrichtung (7) erzeugt sind.

11. Getränkeabgabevorrichtung nach Anspruch 7,
bei der die Eiskörner (F) nicht weniger als 8mm in mittlerer Korngröße sind und die Eisflocken (E) nicht mehr als 5mm in mittlerer Korngröße sind.

## Revendications

1. Distributeur de boissons, qui comprend :
- un dispositif (7) de production de glace qui produit des grains de glace (F) en réfrigérant de l'eau potable,
- un araseur de glace (8) qui forme des flocons de glace (E) en arasant la glace et
- une unité de commande de l'introduction de glace qui place une quantité de prescrite de flocons de glace (E) dont la taille est plus petite que celle de grains de glace (F) dans une coupe (A) avant de placer une quantité prescrite de grains de glace (F) dans la coupe (A).

2. Distributeur de boissons selon la revendication 1, dans lequel la coupe (A) dans laquelle lesdits flocons de glace (E) doivent être placés est vide.

3. Distributeur de boissons selon la revendication 2, dans lequel la quantité de flocons de glace (E) qui doit être placée dans ladite coupe (A) est une quantité qui suffit pour recouvrir la face inférieure de la coupe (A).

4. Distributeur de boissons selon la revendication 2, dans lequel la position de la coupe (A) lorsque lesdits grains de glace (F) doivent être placés dans la coupe (A) est identique à la position de la coupe (A) lorsque les flocons de glace (E) doivent être placés dans la coupe (A).

5. Distributeur de boissons selon la revendication 2, dans lequel lesdits flocons de glace (E) sont formés en arasant avec l'araseur à glace (8) les grains de glace (F) produits par le dispositif (7) de production de glace.

6. Distributeur de boissons selon la revendication 2, dans lequel lesdits grains de glace (F) ont une taille moyenne non inférieure à 8 mm et les flocons de glace (E) ont une taille moyenne non supérieure à 5 mm.

7. Distributeur de boissons selon la revendication 1, dans lequel la coupe (A) dans laquelle lesdits flocons de glace (E) doivent être placés contient déjà une boisson à l'avance.

8. Distributeur de boissons selon la revendication 7, dans lequel la quantité de flocons de glace (E) qui doit être placée dans ladite coupe (A) est une quantité qui suffit pour recouvrir la surface liquide de la boisson que contient la coupe (A).

9. Distributeur de boissons selon la revendication 7, dans lequel la position de la coupe (A) lorsque lesdits grains de glace (F) doivent être placés dans la coupe (A) est identique à la position de la coupe (A) lorsque les flocons de glace (E) doivent être placés dans la coupe (A).

10. Distributeur de boissons selon la revendication 7, dans lequel lesdits flocons de glace (E) sont formés en arasant avec l'araseur à glace (8) les grains de glace (F) produits par le dispositif (7) de production de glace.

11. Distributeur de boissons selon la revendication 7, dans lequel lesdits grains de glace (F) ont une taille moyenne non inférieure à 8 mm et les flocons de glace (E) ont une taille moyenne non supérieure à 5 mm.
